Europäisches Patentamt

European Patent Office

Office européen des brevets

(19)

(11) Veröffentlichungsnummer: **0 152 045**

**A1**

(12) **EUROPÄISCHE PATENTANMELDUNG**

(21) Anmeldenummer: 85101132.0

(22) Anmeldetag: 04.02.85

(51) Int. Cl.⁴: **B 62 D 33/06**
    B 62 D 27/02

(30) Priorität: 10.02.84 DE 3404785

(43) Veröffentlichungstag der Anmeldung:
    21.08.85 Patentblatt 85/34

(84) Benannte Vertragsstaaten:
    DE FR GB SE

(71) Anmelder: Linde Aktiengesellschaft
    Abraham-Lincoln-Strasse 21
    D-6200 Wiesbaden(DE)

(72) Erfinder: Neuf, Ottmar, Dipl.-Ing. (FH)
    Römerstrasse 93a
    D-8753 Obernburg(DE)

(74) Vertreter: Schaefer, Gerhard, Dr.
    Linde Aktiengesellschaft Zentrale Patentabteilung
    D-8023 Höllriegelskreuth(DE)

(54) Fahrbare Arbeitsmaschine mit einem Aufbau.

(57) Fahrbare Arbeitsmaschine wie Gabelstapler, Baumaschine oder dergleichen mit einem Fahrzeugrahmen und mit
einem durch Stützstreben 15, 25 mit dem Fahrzeugrahmen
verbundenen Fahrerschutzdach, wobei die Arbeitsmaschine
mit einer mit mindestens einer Tür versehenen Fahrerschutzkabine ausgerüstet werden kann, wobei die Gelenke 2, 3 der
Tür 13 an einem Hilfsholm 11 bzw. Hilfsrahmen 1, 11
angeordnet sind, der zumindest annähernd parallel zu einer
Stützstrebe 15 oder 25 bzw. einer Strebe 6 des Fahrerschutzdaches an diese angebaut werden kann.

EP 0 152 045 A1

## Fahrbare Arbeitsmaschine mit einem Aufbau

Die Erfindung betrifft eine fahrbare Arbeitsmaschine wie Hublader (Gabelstapler), Baumaschine, Landmaschine oder dergleichen mit einem durch Stützstreben mit dem Fahrzeugrahmen verbundenen Fahrerschutzdach. Dabei ist es auch bereits bekannt, nicht jede Stützstrebe einzeln auf den Fahrzeugrahmen abzustützen, sondern es ist auch bereits bei fortschrittlichen Gabelstaplern bekannt, mindestens jeweils zwei der Stützstreben durch einen parallel zum Rahmen verlaufenden Holm miteinander zu verbinden, der seinerseits durch elastische, schwingungsverzehrende Glieder auf dem Rahmen abgestützt wird. Dabei bezieht sich die Erfindung auf eine Arbeitsmaschine, die mit einer Fahrerschutzkabine versehen werden kann, welche mindestens eine bewegliche Tür aufweist.

Bei derartigen bekannten Arbeitsmaschinen, bei denen nur ein Teil der Maschinen einer Serie mit Kabine ausgerüstet wird, ist es bereits bekannt, die Kabine dadurch zu bauen, daß Türen und Front- und Heckscheibe unmittelbar an die Streben des Fahrerschutzdachgerüstes angebaut werden. Derartige Fahrerschutzdachgerüste werden jedoch mit groben Toleranzen hergestellt und auch die Türen von Fahrerschutzkabinen werden mit einer gewissen Toleranz gefertigt. Das erfordert zeitaufwendige, das heißt hohe Lohnkosten verursachende Anpassarbeiten.

Zudem müssen an dem Fahrerschutzdachgerüst Befestigungsmittel befestigt werden und zu diesem Zweck müssen am Fahrerschutzdachgerüst Gewindelöcher oder Laschen und Buchsen mit solchen nur für den Zweck des Anbaus der Kabinenteile nachträglich angebracht werden. Werden grundsätzlich alle Maschinen mit diesen Befestigungselementen ausgerüstet, obwohl nur ein Teil der Maschinen mit einer Kabine ausgerüster wird, so wird viel Herstellaufwand unnötig verbraucht und darüber hinaus stören diese Elemente den Anblick bei nicht angebauter Kabine. Aber auch bei angebauter Kabine ist meist nicht möglich, die Anschlußpunkte so zu gestalten, daß sie gut aussehen. Eine zweite Möglichkeit besteht darin, das Fahrerschutzdachgerüst abzubauen und durch eine komplette Kabine zu ersetzen, deren Dach hinreichend steif gestaltet ist, daß sie die Aufgabe des Fahrerschutzdaches mit übernehmen kann. Auch das ist ein sehr aufwendiger Weg, zumal heute derartige Maschinen als Gesamtkonzeption gestaltet werden, das heißt sowohl die Gestaltung des Fahrerschutzgerüstes als auch die Gestaltung der Kabine darauf abzielt, diese Bauteile so gestalten, daß Bedienhebel, Fahr- und Bremsbetätigungsorgane und so weiter optimal gestaltet und eingebaut werden können. Insbesondere bei den fortschrittlichen Staplern, bei denen das Fahrerschutzdach zusammen mit den aufrechten Stützstreben und annähernd parallel zum Fahrzeugrahmen verlaufenden Streben einen kompletten, gegenüber dem Fahrzeugrahmen gefederten Fahrerschutzrahmen bildet, ist es möglich, den Fahrersitz und die Bedienungsorgane an diesem Fahrerschutzrahmen zu lagern. Bei Austausch eines Fahrerschutzdaches gegen eine Fahrerschutzkabine müssen bei derartigen Ausgestaltungen alle Anschlüsse für Bedienorgane gelöst und neu justiert werden. Besonders ist dabei zu berücksichtigen, daß auch ein nachträglicher. Umbau eines Fahrerschutzdachgerüstes zu einer Kabine bei bereits an den Benutzer ausgelieferter Arbeitsmaschine möglichst einfach möglich sein soll. Unter Strebe beziehungsweise Stützstrebe wird im folgenden Text gegebenenfalls auch jeweils eine Strebe des Fahrerschutzdaches an sich verstanden, die zumindest annähernd in der gleichen Ebene liegt wie die aufrechten Stützstreben.

Der Erfindung liegt die Aufgabe zu Grunde, eine Gestaltung für Kabinenbauteile zu finden, die einen einfachen schnellen Anbau der Kabinenbauteile an das Fahrerschutzdachgerüst ermöglicht, ohne enge Toleranzen für das Fahrerschutzdachgerüst und beziehungsweise oder die Türen erforderlich zu machen.

Diese Aufgabe wird gemäß der Erfindung dadurch gelöst, daß die Türführungsorgane, vorzugsweise Gelenke, jeweils einer Tür der Fahrerschutzkabine an einem Hilfsholm angeordnet sind, der zumindest annähernd parallel zu einer Stützstrebe des Fahrerschutzdachgerüstes anbaubar ist. Vorzugsweise ist dieser Hilfsholm Teil eines die Tür auf mindestens drei Seiten, vorzugsweise auf allen vier Seiten umgebenden Hilfsrahmens. Es bereitet keine Schwierigkeit, einen Hilfsholm beziehungsweise Hilfsrahmen derart anzubauen, daß durch die Gestaltung der verbindenden Elemente durch Toleranzen entstehende Freiräume überbrückt werden, beispielsweise kann ein solcher Hilfsrahmen mittels einstellbarer Festlegeglieder an drei oder mehr Punkten gegenüber Fahrzeugrahmen und Fahrerschutzdachgerüst festgelegt und justiert werden. An diesem Hilfsrahmen sind sowohl bei einer schwenkbaren Tür die Türgelenke wie auch das Türschloß befestigt, so daß die Lagerung der Tür und das Schloß von den Herstelltoleranzen am Fahrerschutzdachgerüst unberührt bleiben. Die Kabinenteile können aber acuh alleine durch Festklemmen von die Streben umgreifenden Teilen festgelegt werden.

Zwischenräume zwischen Hilfsholm und Hilfsrahmen können durch elastische Mittel wie Dichtmasse oder Hohlgummiprofile oder Rundschnurringe oder dergleichen ausgefüllt werden oder können durch Montageschäume oder andere härtende Kunststoffe ausgefüllt werden, die infolge ihrer Starrheit und Festigkeit den Hilfsrahmen gegenüber dem Fahrerschutzdachgerüst und Fahrzeugrahmen fixieren. Ein Festklemmen kann durch von innen, das heißt von der Kabineninnenseite, gegen gelegte Verkleidungsbleche des Hilfsrahmens erfolgen oder es können im Hilfsrahmen selbst sonstige Klemmvorrichtungen vorgesehen sein. Der Hilfsholm oder Hilfsrahmen kann auch mit dem Fahrzeugrahmen oder den Streben beziehungsweise dem Holm des Fahrerschutzdachgerüstes verklebt werden, das heißt durch eine Klebverbindung dauerhaft verbunden werden.

Derartige komplette, mit Tür versehene und in sich ausgerichtete Hilfsrahmen können leicht auf Lager gehalten und an einen Benutzer der Arbeitsmaschine ausgeliefert werden und können schnell ausgebaut werden und angebaut werden.

An dem Hilfsholm oder Hilfsrahmen können Anschlagkanten oder Verkleidungsbleche oder Gegenhaltebleche vorgesehen sein, die Anschläge oder Halterungen für die Frontscheibe oder Heckscheibe der Kabine bilden.

Der Hilfsrahmen kann auch so gestaltet sein, daß er durch eine Falzung gleichzeitig zusammen mit einer Seitenfläche des Fahrerschutzdaches eine Regenrinne bildet.

Die Anzahl der für einen nachträglichen Anbau einer Kabine benötigten Einzelteile ist durch die Ausgestaltung gemäß der Erfindung so gering wie möglich, das heißt auch die Lagervorratshaltung und die Anzahl der auszuliefernden Teile. Andererseits brauchen am Fahrerschutzdachgerüst nicht von vorne herein Anschlagkanten, Falze oder Anschlagbleche vorgesehen sein, die bei den Arbeitsmaschinen, an die keine Kabine angebaut wird, nicht benötigt werden und somit stören diese auch nicht den Anblick.

Die Erfindung wird im folgenden anhand eines Ausführungsbeispieles erläutert.

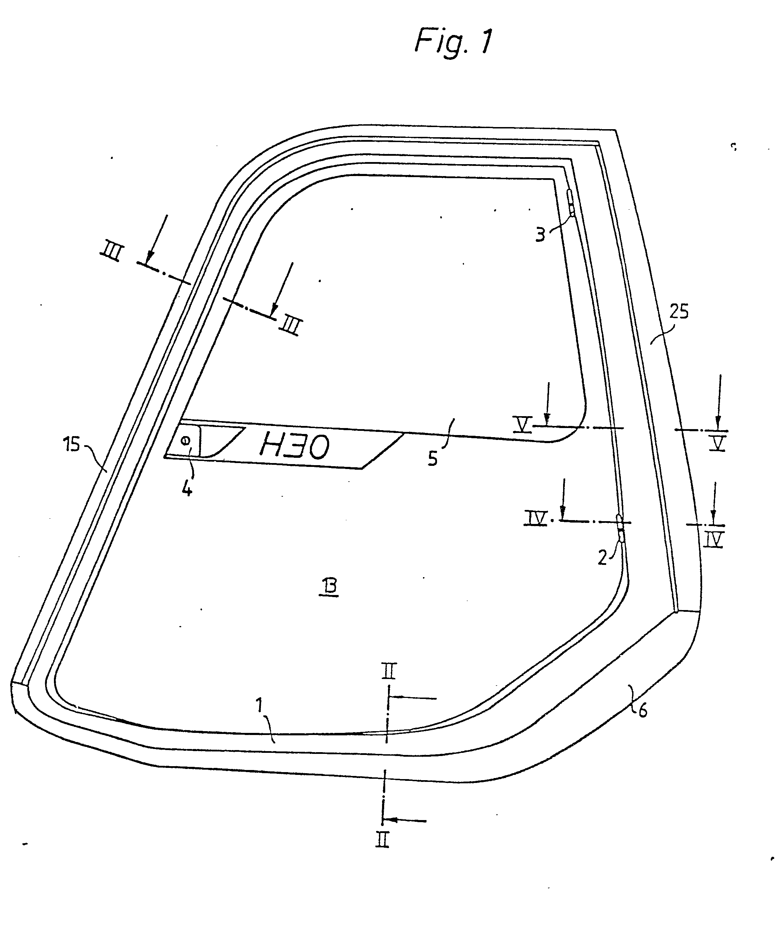

Figur 1 zeigt eine Seitenansicht eines eine Tür allseitig umfassenden Hilfsrahmens mit Tür und mit Teilen des Fahrerschutzdachgerüstes.

Figur 2 zeigt einen Schnitt durch ein Teil der Figur 1 gemäß der Linie II-II.

Figur 3 zeigt einen Schnitt durch ein Teil der Figur 1 gemäß der Linie III-III.

Figur 4 zeigt einen Schnitt durch ein Teil der Figur 1 gemäß der Linie IV-IV.

Figur 5 zeigt einen Schnitt durch ein Teil der Figur 1 gemäß der Linie V-V.

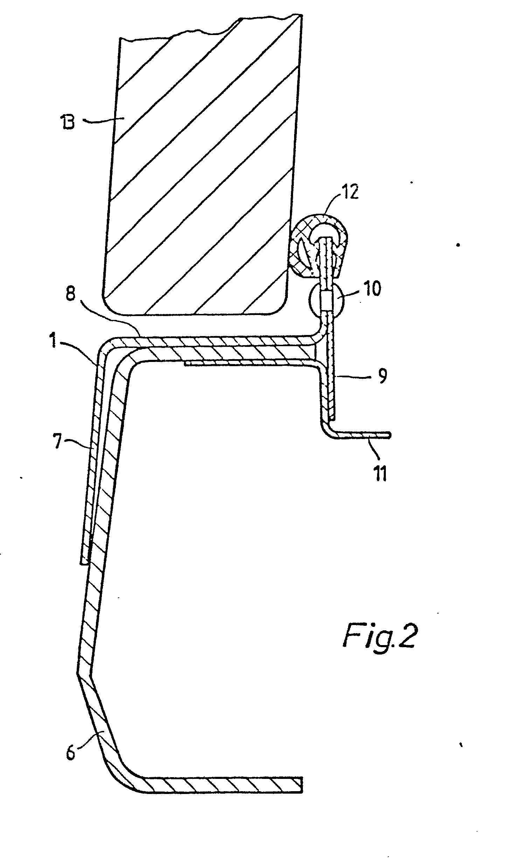

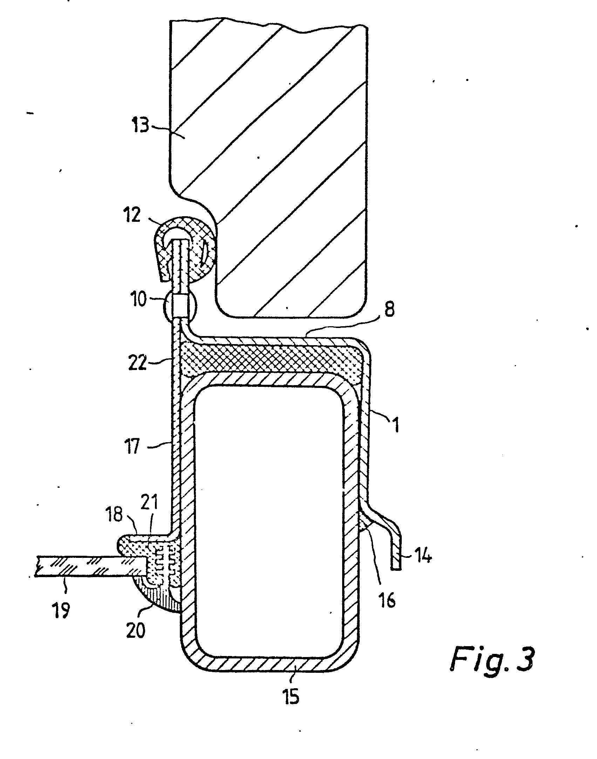

An dem Hilfsrahmen 1 sind die jeweils unteren Teile von zwei Scharniergelenken 2 und 3 befestigt, während die jeweils oberen Teile dieser Scharniergelenke 2 und 3 an einem Türblatt 13 befestigt sind, welches auf der den Scharnieren gegenüberliegenden Seite mit einem Türschloß 4 versehen ist, dessen Gegenlagerteil in dem Hilfsrahmen 1 angeordnet ist. Im oberen Teil des Türblattes 13 ist ein Fenster 5 vorgesehen. Mit 6 ist eine Strebe bezeichnet, die die unteren Enden der aufrechten Stützstreben 15 und 25 miteinander verbindet und zumindest annähernd parallel zu dem in der Zeichnung nicht mehr dargestellten Fahrzeugrahmen verläuft und gegenüber diesem elastisch abgestützt ist. In Figur 2 ist zu erkennen, daß der Hilfsrahmen 1 im unteren Bereich aus einem Z-förmigen Bauteil 7 besteht, welches sich mit einem Holmteil 8 auf die Oberseite des Fahrzeugrahmens 6 auflegt. Mit dem oberen Flansch dieses Z-förmigen Bleches 7,8 ist ein Gegenblech 9 durch Niete 10 verbunden, während das Bodenblech 11 mit dem Fahrzeugrahmen 6 verbunden ist. Das hat die Folge, daß die Teile 7 und 9 den Hilfsrahmen 1 gegenüber dem Fahrzeugrahmen 6 festlegen. Um die obere Kante der Bleche 7,8 und 9 ist ein Gummidichtprofil 12 gelegt. In der Figur 2 ist nur der untere Teil des Türblattes 13 zu erkennen. Aus dem oberhalb des Türschloßes liegenden Schnitt gemäß Figur 3 ist zu erkennen, daß auch in diesem Bereich der Hilfsrahmen 1 ein im Wesentlichen Z-förmiges Blech aufweist, welches in diesem Falle jedoch eine Vorfalzung 14 aufweist, die zusammen mit der aufrechten Strebe 15 des Fahrerschutzdachgerüstes eine Regenrinne bildet, wobei am Eingang des Spaltes zwischen dem Hilfsrahmen 1 und der Strebe 15 ein Dichtmassestreifen 16 eingefügt ist. Anstelle des im unteren Bereich neben dem Fahrzeugrahmen 6 vorgesehenen Gegenbleches 9 ist hier ein Gegenblech 17 vorgesehen, welches eine Anschlagabkantung 18 aufweist, gegen die die Frontscheibe 19 anliegt und durch eine Gegenhalterung 20 festgehalten wird. Zwischen der Anschlagabkantung 18 und der Scheibe 19 ist ein elastisches Dichtprofil 21 angeordnet. Der Raum zwischen der Stützstrebe 15, dem Hilfsrahmen 1 und dem Blech 17 ist mit einem Hartschaum 22 ausgeschäumt, der einerseits dem Hilfsrahmen 1 gegenüber der Stützstrebe 15 eine feste Lage gibt und andererseits vermeidet, daß hier ein Hohlraum entsteht, in dem sich Wasser festsetzen kann, das zu einem Rosten von innen heraus führen kann.

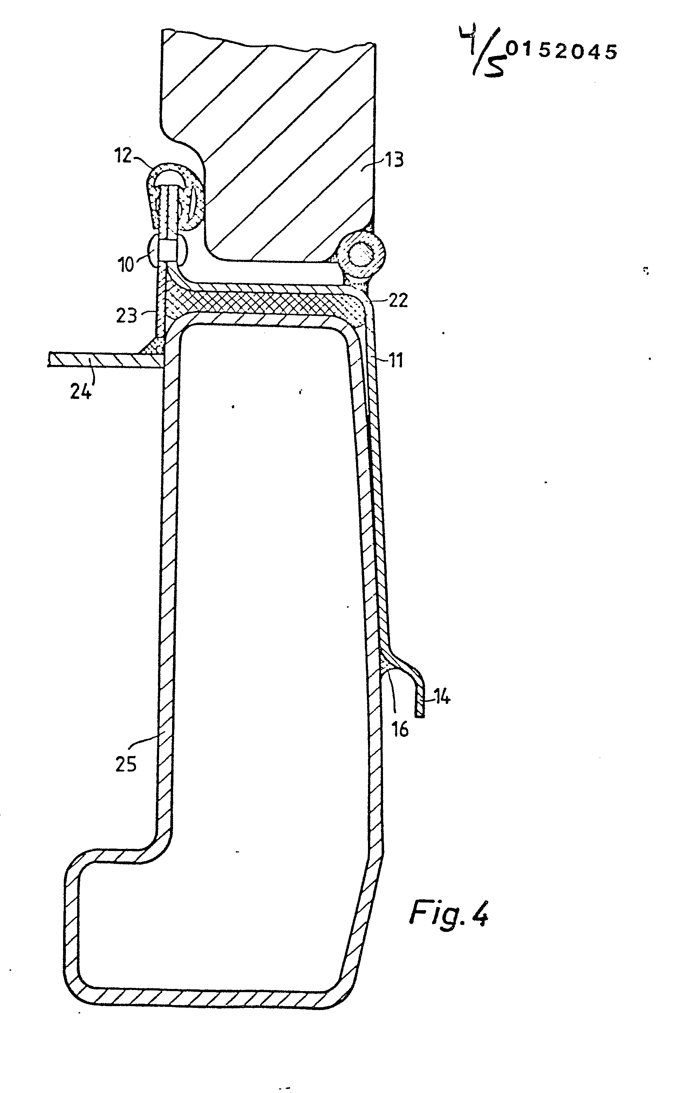

Aus Figur 4 ist zu erkennen, daß in diesem Bereich auf der Innenseite ein Blech 23 vorgesehen ist, welches sich mit einer Dichtlippe gegen das Blech 24 legt, welches seinerseits zur Versteifung des Fahrerschutzdachgerüstes mit der Strebe 25 verbunden ist.

Aus Figur 4 ist weiterhin zu erkennen, wie das Scharnier 2 einerseits am Türblatt 13, andererseits am Hilfsrahmen 1 befestigt ist.

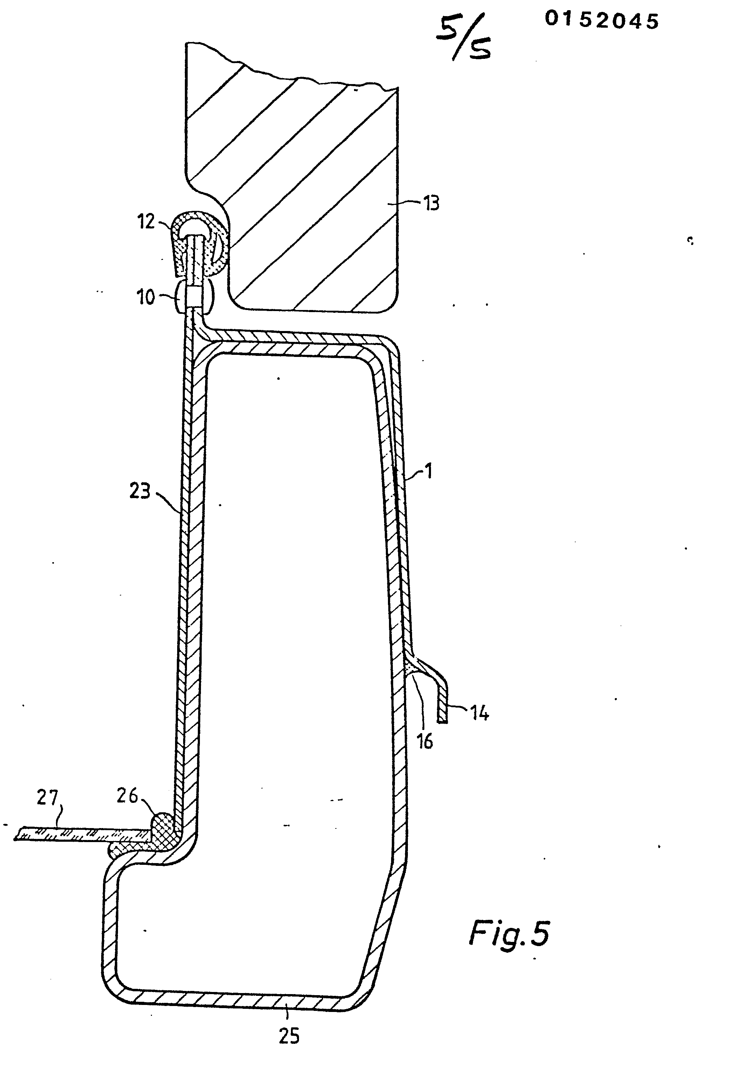

Aus Figur 5 ist zu erkennen, daß in dieser nur wenig oberhalb der Schnittebene gemäß Figur 4 liegenden Schnittebene das Gegenhalteblech 23 verbreitert ist und mit der Hohlkehle der Stützstrebe 25 eine Rinne bildet, in der die Dichtungsmasse 26 gehaltert ist, gegen die die Heckscheibe 27 anliegt.

Zum Zwecke des Anbauens wird der Hilfsrahmen 1 komplett mit Scharniergelenken 2, 3 und Türblatt 13 von aussen eingesetzt und gegen den Fahrzeugrahmen 6 gedrückt und sodann die inneren Bleche 9 beziehungsweise 17 gegengesetzt und durch Niete 10 mit dem Hilfsrahmen 1 verbunden.

Abweichend von der vorstehend beschriebenen Lösung kann die Frontscheibe beziehungsweise Heckscheibe auch eingeklebt werden, wobei an dem Hilfsholm beziehungsweise Hilfsrahmen eine Anschlagkante beziehungsweise eine Anschlagleiste vorgesehen ist und zwischen diese und die Scheibe Klebemasse eingebracht wird. In diese Klebemasse kann auch eine beispielsweise verchromte Zierleiste oder ein Zierprofil mit eingedrückt werden und mit verklebt werden, die dann die Scheibe umgibt.

Auch die Dichtungsmasse 26 kann durch eine Klebemasse ersetzt sein, beziehungsweise Klebemasse sein. Ebenso kann der Dichtmassestreifen 16 eine spritzbare Dichtmasse sein, die nachträglich angespritzt wird.

**0152045**

Patentansprüche

1. Fahrbare Arbeitsmaschine wie Baumaschine, Hublader oder dergleichen mit einem Fahrzeugrahmen und mit einem durch Stützstreben mit dem Fahrzeugrahmen verbundenen Fahrerschutzdach, die mit einer mit mindestens einer Tür versehenen Fahrerschutzkabine versehbar ist, dadurch gekennzeichnet, daß die Gelenke (2, 3) einer Tür (13) der Fahrerschutzkabine an einem Hilfsholm angeordnet sind, der zumindest annähernd parallel zu einer Stützstrebe (15 oder 25) oder einer Strebe (6) anbaubar ist.

2. Arbeitsmaschine nach Anspruch 1, dadurch gekennzeichnet, daß der Hilfsholm Teil eines die Tür auf mindestens drei Seiten umgebenden Hilfsrahmens (1) ist.

3. Arbeitsmaschine nach Anspruch 1 oder Anspruch 2, dadurch gekennzeichnet, daß der Hilfsholm zweiteilig ist, wobei die beiden Teile (7, 8 und 9 oder/und 17 oder/und 22) zusammen auf einer Seite ein im Querschnitt U-förmiges Profil ergeben, dessen Basis neben der Innenseite der Strebe (15 beziehungsweise 25 beziehungsweise 6) beziehungsweise des Fahrzeugrahmens angeordnet ist und dessen Seitenteile die Strebe (6 beziehungsweise 15 beziehungs-weise 25) beziehungsweise den Fahrzeugrahmen zumindest teilweise umfassen.

4. Arbeitsmaschine nach einem der vorangegangenen Ansprüche, dadurch gekennzeichnet, daß der Hilfsrahmen (1) mittels einstellbarer Festlegeglieder an mindestens drei Punkten gegenüber dem Fahrzeugrahmen und den Fahrerschutzdachstreben (6, 15, 25) festlegbar ist.

5. Arbeitsmaschine nach Anspruch 3, dadurch gekennzeichnet, daß der Zwischenraum zwischen Strebe (6 beziehungsweise 15 beziehungsweise 25) und Hilfsrahmen (1) zumindest teilweise mit einem elastischen Dichtmittel gefüllt ist.

6. Arbeitsmaschine nach Anspruch 3, dadurch gekennzeichnet, daß der Zwischenraum zwischen Strebe (6 beziehungsweise 15 beziehungsweise 25) und Hilfsholm mit einem erstarrenden Material (22) gefüllt (vorzugsweise ausgeschäumt) ist.

7. Arbeitsmaschine nach Anspruch 1, dadurch gekennzeichnet, daß ein Seitenteil des Hilfsholmes (21 oder 22), vorzugsweise des Hilfsrahmens (1), als Befestigung für eine Scheibe (19 beziehungsweise 27) ausgestaltet ist.

8. Arbeitsmaschine nach Anspruch 1, dadurch gekennzeichnet, daß am Hilfsrahmen (1) eine Regenrinne (14) angeformt ist.

9. Arbeitsmaschine nach Anspruch 1, dadurch gekennzeichnet, daß der Hilfsholm beziehungsweise Hilfsrahmen (1) mit der Strebe (6 beziehungsweise 15 beziehungsweise 25) beziehungsweise zumindest einigen der Streben (6, 15 und 25) durch eine Klebverbindung verbunden ist.

Kabine an einer

10. Verfahren zum Herstellen einer/Arbeitsmaschine nach Anspruch 1, dadurch gekennzeichnet, daß der Hilfsholm beziehungsweise Hilfsrahmen (1) an die Strebe (6 beziehungsweise 15 beziehungsweise 25) beziehungsweise an den Fahrzeugrahmen angesetzt und danach eine Klebverbindung zwischen dem Hilfsholm beziehungsweise Hilfsrahmen (1) und der Strebe (6 beziehungsweise 15 beziehungsweise 25) beziehungsweise dem Fahrzeugrahmen (6) hergestellt wird.

Fig. 1

0152045

1/5

Fig.2

Fig. 3

0152045

3/5

Fig. 4

Fig.5

## 0152045
Nummer der Anmeldung

EP 85 10 1132

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | GB-A-2 020 609 (CASE)<br><br>* Seite 2, Zeile 96 - Seite 3, Zeile 19; Seite 3, Zeilen 111-121; Abbildungen 2, 3, 6 * | 1,2,4, 5,7 | B 62 D 33/06<br>B 62 D 27/02 |
| A | EP-A-0 039 071 (SAURER)<br>* Seite 8, Zeile 23 - Seite 9, Zeile 5; Abbildungen 2, 3 * | 3,6 | |
| A | FR-A-2 479 361 (DAIMLER-BENZ)<br>* Anspruch 1; Abbildung 2 * | 9,10 | |

RECHERCHIERTE SACHGEBIETE (Int Cl.4)

B 62 D 33/00
B 60 J 7/00
B 62 D 27/00

Der vorliegende Recherchenbericht wurde für alle Patentansprüche erstellt.

| Recherchenort | Abschlußdatum der Recherche | Prüfer |
|---|---|---|
| DEN HAAG | 10-05-1985 | OSBORNE J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82